Europäisches Patentamt

European Patent Office

Office européen des brevets

(19)

(11) Numéro de publication : **0 396 191 B1**

(12) **FASCICULE DE BREVET EUROPEEN**

(45) Date de publication du fascicule du brevet :
**01.09.93 Bulletin 93/35**

(51) Int. Cl.$^5$ : **G01L 1/24**

(21) Numéro de dépôt : **90201075.0**

(22) Date de dépôt : **27.04.90**

(54) **Dispositif capteur de pression à fibre optique.**

(30) Priorité : **02.05.89 FR 8905802**

(43) Date de publication de la demande :
**07.11.90 Bulletin 90/45**

(45) Mention de la délivrance du brevet :
**01.09.93 Bulletin 93/35**

(84) Etats contractants désignés :
**DE FR GB IT SE**

(56) Documents cités :
**EP-A- 0 144 509**
**EP-A- 0 152 706**
**EP-A- 0 153 997**
**GB-A- 2 084 316**
**ELECTRONICS LETTERS, vol. 20, no. 5, 1 mars 1984, pages 209-211, Londres, GB; A.D. KERSEY et al.: "Linearised polarimetric optical fibre sensor using a 'heterodyne-type' signal recovery scheme"**
**OPTICS LETTERS, vol. 12, no. 3, mars 1987, pages 220-222, Optical Society of America, New York, US; G. BEHEIM et al.: "Fiber-optic photoelastic pressure sensor with fiber-loss compensation"**

(73) Titulaire : **LABORATOIRES D'ELECTRONIQUE PHILIPS**
**3, Avenue Descartes**
**F-94450 Limeil-Brévannes (FR)**
(84) **FR**
Titulaire : **N.V. Philips' Gloeilampenfabrieken**
**Groenewoudseweg 1**
**NL-5621 BA Eindhoven (NL)**
(84) **DE GB IT SE**

(72) Inventeur : **Hazan, Jean-Pierre, Société Civile S.P.I.D.**
**156, Boulevard Haussmann**
**F-75008 Paris (FR)**
Inventeur : **Steers, Michel, Société Civile S.P.I.D.**
**156, Boulevard Haussmann**
**F-75008 Paris (FR)**
Inventeur : **Delmas, Gilles, Société Civile S.P.I.D.**
**156, Boulevard Haussmann**
**F-75008 Paris (FR)**
Inventeur : **Nagel, Jean-Louis, Société Civile S.P.I.D.**
**156, Boulevard Haussmann**
**F-75008 Paris (FR)**

(74) Mandataire : **Caron, Jean et al**
**Société Civile S.P.I.D. 156, Boulevard Haussmann**
**F-75008 Paris (FR)**

EP 0 396 191 B1

Jouve, 18, rue Saint-Denis, 75001 PARIS

**Description**

La présente invention concerne un dispositif capteur à fibre optique monomode pour la mesure de force et/ou de pression, l'influence de la force ou de la pression à mesurer étant à peu près perpendiculaire à l'axe longitudinal de la fibre optique, dispositif muni de moyens pour introduire dans la fibre de la lumière polarisée et pour recevoir cette lumière à la sortie de la fibre dans un ensemble de détection sensible à la polarisation de la lumière et muni de moyens pour analyser la lumière selon au moins deux directions de polarisation différentes faisant entre elles un angle compris entre 30° et 60°.

De tels dispositifs sont basés sur l'effet photo-élastique dans une fibre monomode, c'est à dire la rotation de la polarisation ou le changement d'ellipticité de la polarisation sous l'effet d'une contrainte. Ces dispositifs sont utilisés notamment dans des systèmes de détection d'intrus, pour la surveillance et la sécurité. La fibre est par exemple enterrée dans le sol en suivant une ligne périmétrique à l'extérieur de batiments, pour détecter la présence d'intrus avant même qu'ils n'atteignent les batiments.

Dans l'art antérieur, ordre a imaginé de disposer deux détecteurs orientés à 45° l'un par rapport à l'autre en sortie de la fibre. Un tel dispositif est connu de EP-A-0 120 999 (Fig. 8 et page 11 entière). La raison d'une telle disposition est que le dispositif décrit par ce document utilise soit une fibre spéciale, soit un conditionnement spécial par torsadage de la fibre autour de son axe et ceci à raison de 15-20 tours/mètre. Ce torsadage ne doit pas évoluer dans le temps, ce qui donnerait de fausses alarmes et en outre, le cas d'une intrusion sur un espace couvrant un ou plusieurs tours pose problème car il peut y avoir une désensibilisation par compensation.

Il est en outre intéressant de concevoir un système fonctionnant avec des fibres monomodes conventionnelles. Avec de telles fibres enterrées dans le sol, on ne peut pas maîtriser parfaitement la transmission de l'effort et, en fait, on peut observer deux types de phénomènes sans être sûr à l'avance de celui qui aura lieu (on peut d'ailleurs avoir une combinaison des deux).

Ces deux effets physiques sont :
- une rotation du plan de polarisation, par exemple, par torsion de la fibre .
- une modification de la forme de la polarisation obtenue par compression, par exemple, une polarisation linéaire devient alors elliptique, cet effet étant d'ailleurs très fréquent : on l'appelera biréfringence par compression.

Ainsi, une lumière polarisée injectée à l'entrée de la fibre et "analysée" à la sortie voit sa transmission changée à travers le système sous l'action d'une intrusion.

Des effets parasites (fibre non parfaite, effets thermiques ou mécaniques) peuvent modifier, dans l'espace comme dans le temps, l'orientation et la forme de la polarisation, ce qui pourra donner comme résultat, de très fortes atténuations du signal communément appelées "fading" par l'homme du métier.

La présente invention a pour but de se prémunir contre ces effets.

Les problèmes à résoudre sont les suivants :
- Dans le cas où il n'y a pas de perturbations, où la polarisation est préservée, et où celle-ci est linéaire à l'entrée de la fibre, le premier problème qui se pose est de trouver une configuration qui permette de détecter correctement et efficacement aussi bien la rotation du plan de polarisation que la biréfringence par compression. Une seule orientation d'analyseur en sortie du système n'est pas optimale et il en faut au moins deux, l'une pour détecter la rotation du plan de polarisation et l'autre pour détecter la biréfringence par compression. Il se trouve que ces deux orientations sont à 45° l'une de l'autre et non à 90° comme c'est le cas dans la plupart des montages ne s'intéressant qu'à un seul de ces effets. On retrouve donc, par un raisonnement complètement indépendant et pour d'autres raisons, le montage décrit par le document cité.
- Dans le cas où des effets parasites font tourner le plan de polarisation en aval de l'intrusion, cela a des effets néfastes avec les deux types de biréfringence observables. Une bonne solution, pour l'un comme pour l'autre, est d'utiliser pour la sortie deux analyseurs orientés différemment. Il se trouve encore, par une heureuse coïncidence, que pour les deux cas ces orientations doivent être à environ 45° (de 30 à 60°) l'une de l'autre. Donc, en utilisant deux analyseurs orientés à environ 45° l'un de l'autre, on résout du même coup trois problèmes :
- la détection efficace de la rotation du plan de polarisation ainsi que de la biréfringence par compression (elliptisation) ;
- la résolution des effets d'une rotation parasite du plan de polarisation;
- la résolution des effets sur la biréfringence par compression d'une rotation parasite entre le point d'intrusion et l'analyseur.

Malheureusement, cela ne résout pas tous les problèmes, et en particulier les effets de perturbations se produisant en amont de l'intrusion tels que :
- la rotation parasite de la polarisation en amont du point d'intrusion pour la biréfringence par compression ;
- la déformation parasite de la polarisation (circularisation) incidente au point d'intrusion : en effet, la rotation d'une polarisation circulaire n'est pas détectable.

Afin de résoudre simultanément ces problèmes le dispositif selon l'invention est remarquable en ce qu'il est muni de moyens pour introduire à l'entrée de la fibre plusieurs lumières non corrélées et polarisées chacune de façon différente, et de moyens pour distinguer l'une de l'autre dans le susdit ensemble de détection à la sortie de la fibre, les lumières qui ont été introduites à l'entrée dans la fibre.

Par l'expression "non corrélées" on entend qu'elles ne peuvent pas interférer ensemble. Pour que deux vibrations ne puissent pas interférer il suffit par exemple que :
- soit elles proviennent de deux lasers différents
- soit elles ne coïncident pas dans le temps.

Avantageusement le dispositif est muni de moyens pour introduire à l'entrée des lumières polarisées linéairement.

Ces moyens introduisent avantageusement deux lumières qui sont disposées de façon que le plan de polarisation de l'une fasse un angle compris entre 30° et 60° avec le plan de polarisation de l'autre.

Ces moyens peuvent contenir deux sources pour obtenir des lumières de longueur d'onde différente; dans ce cas les moyens pour distinguer les lumières les unes des autres dans l'ensemble de détection sont basés sur la longueur d'onde de la lumière.

Les deux sources peuvent aussi avoir la même longueur d'onde mais, dans une première variante, elles sont alors modulées chacune par une fréquence différente, et les moyens pour distinguer les lumières les unes des autres dans l'ensemble de détection sont basés sur la détection des deux fréquences de modulation différentes.

Selon une deuxième variante, les deux sources sont activées tour à tour, et les moyens pour distinguer les lumières les unes des autres dans l'ensemble de détection sont basés sur l'utilisation d'un synchronisme temporel entre les détecteurs et les sources.

Mais les deux lumières peuvent aussi bien être obtenues à partir d'une source unique, suivie d'un dispositif électro-optique qui est modifié au cours du temps. Alors, le dispositif électro-optique est avantageusement un cristal liquide et les parois du contenant du cristal liquide sont polies selon deux directions à 45° l'une de l'autre; dans ce cas les moyens pour distinguer les lumières les unes des autres dans l'ensemble de détection sont basés sur l'utilisation d'un synchronisme temporel entre les de détection et le dispositif électro-optique.

L'invention est avantageusement utilisée dans un système de détection d'intrus, muni d'un dispositif capteur selon l'une quelconque des revendications précédentes.

La description qui va suivre, en regard des dessins annexés décrivant des exemples fera bien comprendre comment l'invention peut être réalisée.

La figure 1 illustre la définition des différents angles des plans de polarisation rencontrés dans le dispositif.

positif.

Les figures 2 à 5 représentent chacune schématiquement une variante de réalisation d'un dispositif selon l'invention.

La figure 6 est une courbe représentant la somme de signaux provenant de deux analyseurs en fonction de leur différence d'orientation.

La figure 7 est une courbe illustrant l'effet d'une lame $\lambda/4$ placée avant le dispositif de détection.

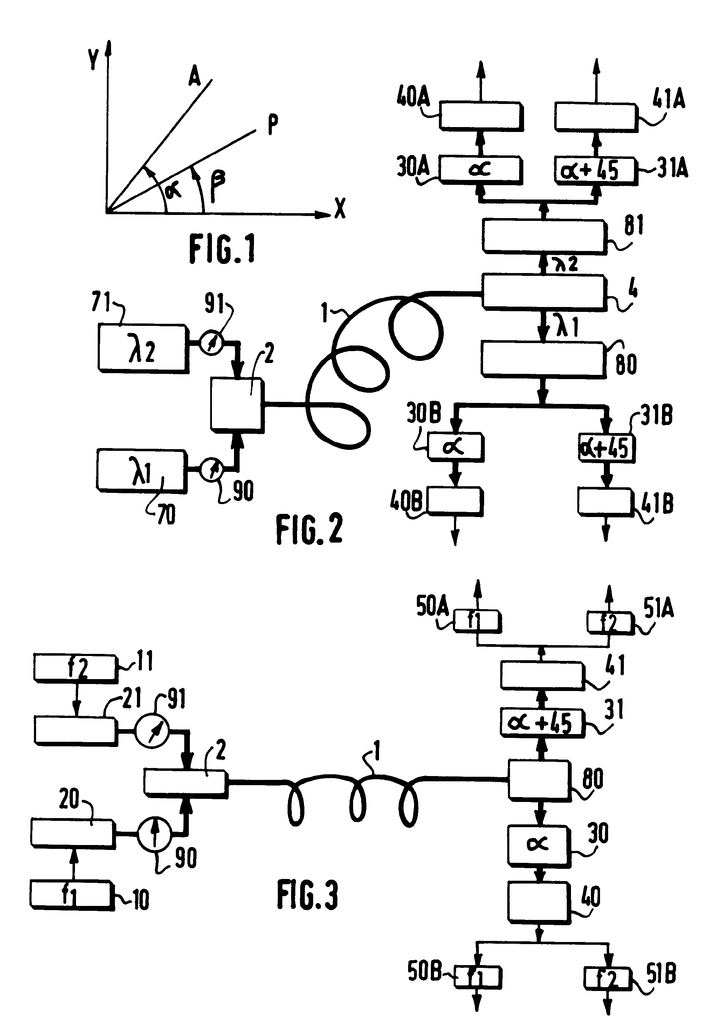

Considérons un système élémentaire constitué d'une source de lumière polarisée linéairement dans un plan indiqué par P sur la figure 1, la lumière étant introduite dans une fibre. On suppose d'abord que la fibre est parfaite et n'est pas soumise à d'autre contrainte que celle à détecter. Cette contrainte crée localement une biréfringence dont le grand axe est l'axe X sur la figure 1. Supposons enfin qu'en sortie de la fibre est disposé un analyseur dont le plan d'analyse est indiqué par A. Les plans A et P font respectivement avec le plan X les angles $\alpha$ et $\beta$.

En l'absence de contrainte, la loi de Malus nous enseigne que l'intensité détectée par l'analyseur est:
$$I = I_o \cos^2(\beta - \alpha)$$
où $I_o$ est l'intensité maximale détectée pour $\beta = \alpha$.

Si une force est appliquée selon X, la biréfringence induite crée, sur la longueur L de fibre à laquelle la contrainte est appliquée, une différence d'indice entre les plans X et Y d'où résulte un déphasage $\phi$. Pour mémoire, si $n_x$ et $n_y$ sont les indices selon les directions X et Y, et si $\lambda$ est la longueur d'onde, on a:
$$\phi = (n_x - n_y)2\pi L/\lambda$$
L'amplitude normalisée, introduite à l'entrée de la fibre, en fonction du temps, étant égale à $\cos \omega t$, ses composantes selon X et Y sont:
$$x = \cos\beta.\cos\omega t$$
$$y = \sin\alpha.\cos\omega t$$
Si un déphasage $\phi$ est introduit par une intrusion dans la direction Y par rapport à la direction X, on a alors:
$$y = \sin\beta.\cos(\omega t - \phi)$$
L'amplitude transmise par l'analyseur est égale à:
$$A = x.\cos\alpha + y.\sin\alpha$$
soit $A = \cos\beta.\cos\alpha.\cos\omega t + \sin\alpha.\sin\beta.\cos(\omega t - \phi)$
L'intensité détectée est $I \propto A^2$
Après quelques manipulations trigonométriques, on aboutit à:
$$I \propto \cos^2(\alpha-\beta) - \sin 2\alpha.\sin 2\beta.\sin^2(\phi/2)$$
Le terme $\cos^2(\alpha-\beta)$ représente l'intensité en l'absence de contrainte, et le terme $\sin 2\alpha \sin 2\beta \sin^2(\phi/2)$ représente la variation d'intensité due à la contrainte. Cette variation est elle même composée de deux termes dont l'un $f = \sin^2(\varphi/2)$ est dû à l'intrusion, et l'autre est un coefficient géométrique multiplicateur qui dépend des orientations de l'analyseur et du polariseur par rapport à la force. Les termes $\sin 2\alpha$ et $\sin 2\beta$ jouent des rôles symétriques. On supposera pour l'instant que $\sin 2\alpha = 1$.

Il semblerait qu'il suffise de placer l'analyseur et le polariseur de façon que chacun des angles $\alpha$ et $\beta$

vaille 45° ou 135° pour obtenir la sensibilité la meilleure. Mais la présence des contraintes parasites naturelles peut provoquer des changements dans l'état de polarisation, qui devient ainsi inconnu à priori, à l'endroit où la force est appliquée.

Dans le cas d'une rotation parasite du plan de polarisation en amont du lieu d'application de la force d'intrusion, il y a risque que cette rotation soit telle que $\sin 2\beta$ soit proche de ou égal à 0, ce qui entraînerait un très fort "fading". Pour éviter cet effet, le dispositif selon l'invention est muni de moyens pour injecter, non pas une, mais deux ondes, non corrélées et de polarisations orientées l'une par rapport à l'autre se-lon un angle $\beta_0$.

Pour une biréfringence donnée, on a donc deux signaux dont l'un est affecté d'un coefficient multipli-cateur $\sin 2\beta$ et l'autre d'un coefficient $\sin 2(\beta+\beta_0)$. Si par exemple $\beta_0 = 45°$ et $\beta=0$, alors $\sin 2\beta=0$, mais $\sin 2(\beta+45°)=1$. Il suffit que l'un des signaux soit supérieur à un certain seuil pour déclencher une alarme. Notons cependant que, si l'on veut additionner les deux signaux avant de les comparer à un seuil, il convient de prendre les valeurs absolues et le coef-ficient multiplicateur devient $|f.\sin 2\beta| + |f.\sin 2(\beta + \beta_0)|$. Cette addition en valeur absolue peut être faite par es moyens analogiques ou numériques connus.

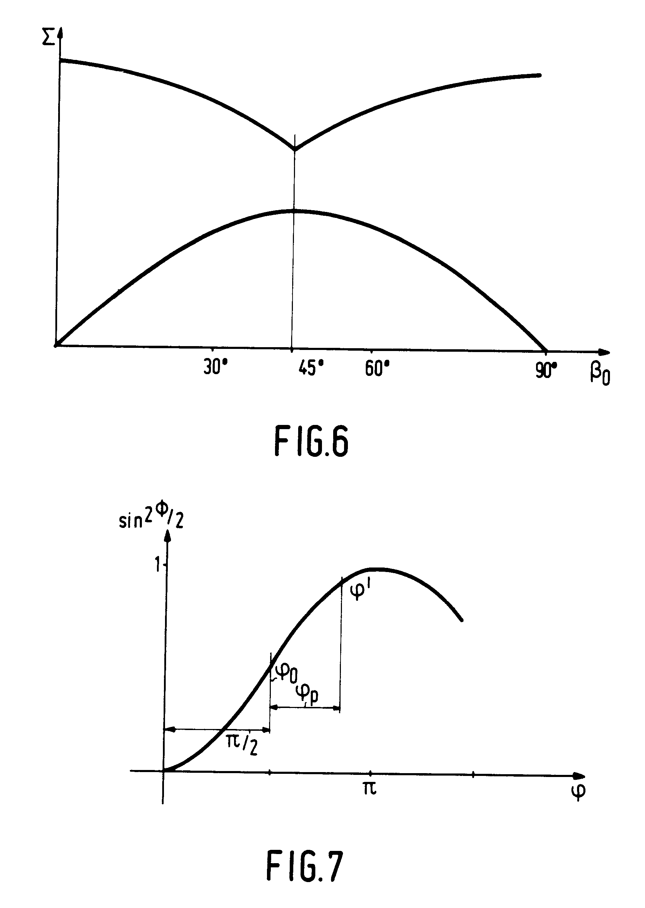

Sur la figure 6, l'ordonnée représente la valeur de cette somme de valeurs absolues, avec $\beta_0$ en abscis-se. Les courbes du haut et du bas représentent respectivement le lieu du maximum et le lieu du minimum que la valeur de ladite somme peut atteindre lorsque $\beta$ varie de façon aléatoire entre 0 et 360°, pour un $\beta_0$ fixé. Pour $\beta_0=0$ ou 90°, le minimum (courbe du bas) est nul, ce qui est rédhibitoire. Pour $\beta_0=45°$, le mini-mum est optimal, et entre $\beta_0=30°$ et $\beta_0=60°$, il se dé-grade peu. On choisit donc $\beta_0$ entre ces deux valeurs.

Etant donné que les termes $\sin 2\alpha$ et $\sin 2\beta$ jouent des rôles symétriques, cette conclusion vaut aussi pour les analyseurs de sortie, et explique l'intérêt de placer ceux-ci aussi avec une orientation entre eux de 45° environ.

Les différentes façons de mettre en oeuvre une injection de deux polarisations, non corrélées et orientées à 45° l'une de l'autre, sont indiquées en détail plus loin.

Nous avons considéré jusqu'ici que la polarisation d'entrée était linéaire et le restait jusqu'au point d'intrusion. Malheureusement, les fibres monomodes conventionnelles préservent mal la polarisation et on peut très bien retrouver une polarisation circulaire au point d'intrusion. Ainsi, une intrusion qui causerait une rotation de la polarisation ne serait pas détectable car la rotation d'une polarisation circulaire n'est pas détectable.

Or, précisément, l'injection de deux polarisations rectilignes non corrélées, orientées à $\pi/4$ l'une de l'autre, permet aussi de contourner cette difficulté.

En effet, pour qu'une vibration rectiligne se transforme en vibration circulaire après la traversée d'un milieu (ici la fibre), il faut que celui-ci :
- d'une part agisse comme une lame déphasan-te de $\pi/2$ dite lame quart d'onde (abréviation : lame $\lambda/4$).
- d'autre part que ses axes soient orientés à 45° de la vibration rectiligne incidente.

Par contre, une vibration rectiligne parallèle à l'un des deux axes de la lame traversera le milieu sans elliptisation.

Ainsi, si une fibre au cours du temps et/ou en amont de l'intrusion devient biréfringente par effet parasite de telle façon que l'on puisse l'assimiler à une lame $\lambda/4$ parasite avec des axes dont l'orientation n'est pas connue a priori, cette fibre rendra circulaire une vibration rectiligne incidente à 45° de ses axes ; par contre, elle ne modifiera pas une vibration parallèle à l'un de ses axes.

Ainsi, si on n'injecte qu'une seule onde de polarisation rectiligne, il y a des risques que celle-ci puisse devenir (quasi) circulaire au point d'intrusion et, comme nous l'avons indiqué, on ne pourra guère détecter l'intrusion si celle-ci a pour effet de tourner la polarisation.

Par contre, si on injecte deux polarisations non corrélées orientées à environ 45° l'une de l'autre, si l'une devient circulaire, l'autre restera rectiligne ou elliptique aplatie et pourra être aisément détectée. Le "fading" sera donc limité.

L'injection de deux polarisations non corrélées orientées à environ 45° l'une de l'autre permet donc de résoudre aussi bien le problème de la rotation de polarisation rectiligne en amont de l'intrusion pour la détection d'une biréfringence par compression que le problème de la modification de la forme de la vibration (circularisation) dans le cas d'une intrusion causant une rotation de la polarisation.

Les deux vibrations doivent être non corrélées : ce point est très important car si les vibrations étaient corrélées cela reviendrait à injecter une seule vibration d'orientation intermédiaire qui pourrait au gré des perturbations se retrouver mal orientée.

Finalement on "multiplexe" plusieurs orientations de polarisation à l'entrée et plusieurs analyseurs à la sortie, en évitant soigneusement des angles relatifs de 0° ou de 90° entre les polariseurs aussi bien qu'entre les analyseurs.

Une première variante d'un dispositif selon l'invention est représentée sur la figure 2. Ce dispositif comporte deux lasers 70,71; chacun d'eux émet une lumière de longueur d'onde différente, par exemple $0,8\mu m$ et $0,85\mu m$, ou encore $1,25\ \mu m$. La lumière is-sue du laser 70 traverse un polariseur linéaire 90 qui est disposé selon une première orientation dans le plan perpendiculaire au faisceau de lumière. La lumière issue du laser 71 traverse un autre polariseur linéaire 91 qui est disposé selon une seconde orien-tation tournée de 45° par rapport à la première.

Les deux lumières polarisées sont ajoutées l'une à l'autre dans un coupleur 2 et introduites dans la fibre 1. Celle-ci est de préférence une fibre dont les caractéristiques sont les suivantes: l'âme a un diamètre de l'ordre de 5 µm, avec une ouverture numérique de l'ordre de 0,15 radian. Elle est munie d'un revêtement qui doit, autant que possible, ne pas introduire de contraintes propres (par exemple dûes à la température) et doit transmettre de façon reproductible les compressions externes.

A la sortie de la fibre est disposé un séparateur 4 qui scinde le faisceau en deux, selon la longueur d'onde. Un tel séparateur est basé de façon connue sur l'emploi d'un prisme, ou d'un réseau, ou d'un miroir sélectif en longueur d'onde

Chacun des deux faisceaux, de longueur d'onde différente, est amené à un séparateur 80, 81 respectivement. Ces séparateurs partagent le faisceau en deux faisceaux: il peut s'agir de miroirs semi-réfléchissants qui laissent passer une partie de la lumière et en réfléchissent une autre. On peut utiliser à cet effet des systèmes du genre de ceux employés dans les lecteurs de disques optiques numériques, pour séparer une partie de faisceau laser à des fins d'asservissement. L'un des deux faisceaux ainsi créés à partir du faisceau de la première longueur d'onde est amené à un analyseur polarisant 30A et l'autre des deux faisceaux est amené à un analyseur polarisant 31A. Les orientations des deux analyseurs 30A et 31A diffèrent l'une de l'autre de 45°.

Les deux faisceaux de la deuxième longueur d'onde sont amenés de façon semblable à deux analyseurs 30B, 31B qui sont orientés à 45° l'un par rapport à l'autre. Chaque lumière issue d'un des analyseurs 30A, 31A, 30B, 31B est amenée à un détecteur d'amplitude lumineuse référencé respectivement 40A, 41A, 40B, 41B, et enfin de compte les quatre valeurs issues de ces quatre détecteurs sont ajoutées (en valeur absolue) dans un circuit (non représenté), d'un type quelconque.

Dans les variantes des figures suivantes, les éléments qui ont des fonctions identiques portent les mêmes chiffres de référence.

Les traits épais concernent des trajets de lumière, et les traits fins des trajets électriques.

Le dispositif de la figure 3 comporte deux lasers identiques 20,21. Leurs lumières ont la même longueur d'onde. Chacun d'eux est modulé en amplitude par un modulateur 10,11 respectivement. Ces modulateurs fournissent des signaux de modulation par exemple sinusoidaux. La fréquence de modulation doit être plus élevée que celle des variations d'amplitude susceptibles de se produire lors d'une intrusion, c'est à dire d'une contrainte à détecter, appliquée à la fibre. Les bandes passantes typiques d'intrusion sont de l'ordre de 0,1 à 10 hertz. La fréquence de modulation sera donc au moins égale à quelques dizaines de hertz.

Les deux lumières issues des lasers 20,21 sont ajoutées l'une à l'autre dans un coupleur 2 comme précédemment, et introduites dans la fibre 1. A la sortie de la fibre, la lumière est séparée en deux dans un séparateur 80 (à miroir semi-réfléchissant), et chacune des deux lumières issues du séparateur 80 est amenée à un analyseur 30,31, faisant entre eux un angle de 45°. Chacun d'eux est suivi d'un détecteur d'amplitude 40,41 et le signal électrique issu des détecteurs 40,41 est amené à des filtres passe-bande électriques 50A,51A,50B,51B. Les filtres 50A,50B ont une fréquence centrale égale par exemple à celle du modulateur 10, et les filtres 51A,51B ont une fréquence centrale correspondant à celle du modulateur 11. Bien entendu les fréquences et les bandes passantes des filtres sont choisies de façon à pouvoir séparer de façon fiable les informations issues des lasers 20 et 21. Il faut notamment éviter que l'une des fréquences soit une harmonique de l'autre.

Les signaux électriques issus des filtres sont enfin ajoutés en valeur absolue comme dans le cas précédent.

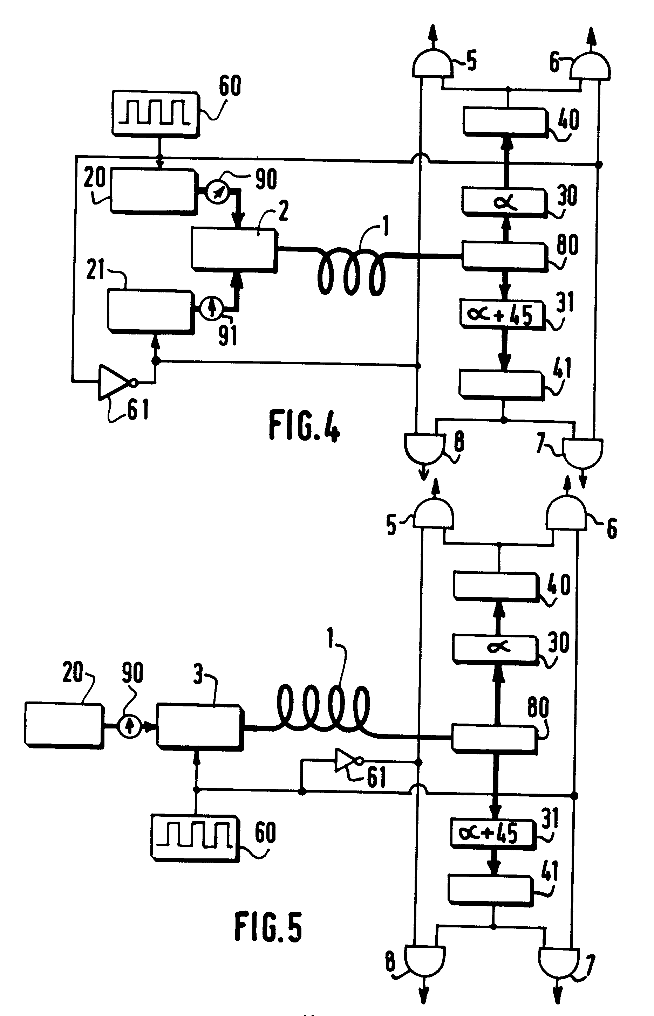

Le dispositif de la figure 4 est très voisin de celui de la figure 3. Les éléments 20,21,2,1,80,30,31,40,41 sont identiques. Seuls les modulateurs diffèrent, et les filtres. Ici la source de modulation est un générateur de signaux carrés 60, qui commande le laser 21. Un inverseur logique 61 transmet le signal de modulation inversé au laser 21.

A la sortie des détecteurs d'amplitude 40,41 sont disposées des portes 5,6,7,8. Les portes 6 et 7 sont commandées, c'est à dire ouvertes ou fermées par le signal de modulation issu du générateur 60 et laissent passer le signal correspondant au laser 20. Les portes 5 et 8 sont commandées par le signal inversé issu de l'inverseur 61 et laissent donc passer le signal correspondant au laser 21. La fréquence du signal carré est choisie, ici aussi, plus élevée que les fréquences d'intrusion.

Comme précédemment les signaux issus des portes 5-8 sont ajoutés les uns aux autres en valeur absolue.

Le dispositif de la figure 5 enfin ne comporte qu'un seul laser 20. Ceci facilite l'introduction de la lumière dans la fibre, dont le diamètre est très faible: de ce fait l'introduction de plusieurs lumières peut poser des problèmes de précision mécanique. Outre l'économie d'un laser, ce dispositif fait aussi l'économie d'un coupleur, qui est un élément coûteux.

La lumière du laser traverse un polariseur linéaire 90 puis une cellule électro-optique 3 dont le rôle est de faire tourner le plan de polarisation sous l'action d'une tension électrique de commande. Cette cellule peut être de l'un des types connus pour agir sur la lumière, par exemple une cellule de Faraday; mais la cellule 3 est de préférence une cellule à cristal liquide: un tel cristal est en effet particulièrement facile à commander avec une dépense d'énergie faible. Le cristal liquide est placé dans un contenant présentant des parois parallèles transparentes, par exemple en verre, que traverse la lumière. On sait que les micro-rayures résultant du polissage des parois, ou bien l'utilisation de couches d'accrochage planaires déposées sur ces mêmes parois, permettent d'obtenir une orientation convenable des molécules du cristal. Dans le cas présent, on utilise pour les deux parois de la cellule des directions d'accrochage à 45° l'une de l'autre, pour faciliter l'orientation des molécules selon l'une ou l'autre de ces deux directions.

La tension électrique appliquée à la cellule 3 provient d'un générateur de signaux carrés 60. Le reste du dispositif est semblable à celui représenté sur la figure 4. Notamment, le signal du générateur commande les portes 6 et 7, et un signal inversé par l'inverseur 61 commande les portes 5 et 8.

Le signal dû à une force de compression est proportionnel à $\sin^2\varphi/2$. Pour des forces petites, ce signal qui est alors à peu près égal à $\varphi^2/4$, est très faible . Pour accroître la sensibilité, on peut ajouter une lame dite $\lambda/4$, qui ajoute un déphasage de $\pi/2$ de façon à procurer un point de fonctionnement $\varphi_0$ (figure 7) qui, sans perturbation, est situé dans une partie quasi-linéaire de la courbe $\sin^2\varphi/2$. Par contre, dans le cas d'une perturbation entraînant un déphasage parasite $\varphi_p$, le point de fonctionnement est alors $\varphi'=\varphi_0+\varphi_p$. Si par hasard, $\varphi_p$ est égal à $\pi/2$, $\varphi'$ est encore placé en un point de sensibilité nulle: il faudrait alors qu'il n y ait pas de lame $\lambda/4$. Etant données ces considérations, il est intéressant, tout en conservant les deux ensembles de détection en sortie décrits plus haut avec les deux détecteurs à 45°, de diviser le faisceau avant son entrée dans l'ensemble de détection et d'ajouter sur le faisceau séparé supplémentaire une lame $\lambda/4$ suivie d'un analyseur de polarisation linéaire à 45° des axes de la lame (ensemble appelé aussi analyseur circulaire), lui même suivi d'un ensemble de détection semblable à ceux décrits ci-dessus et capable de distinguer l'une de l'autre les deux lumières émises à l'entrée (tout ce dispositif additionnel n'est pas représenté pour ne pas compliquer la figure).

Bien entendu, des variantes différant des exemples ci dessus peuvent être utilisées. Par exemple, bien qu'un laser soit le type de source idéal pour une fibre optique, il n'est pas impossible d'utiliser d'autres types de sources connues. On peut aussi placer un miroir à l'extrémité de la fibre, et disposer les systèmes de détections à la même extrémité que les sources de lumière, avec un système semi-réfléchissant pour séparer la lumière entrante de la lumière sortante.

En outre, au lieu d'ajouter les signaux de sortie les uns aux autres, on peut alimenter à partir de chacun d'eux un détecteur de variation (c'est à dire d'intrusion) distinct, et prévoir un circuit OU logique qui délivre une information si l'un quelconque des quatre détecteurs décèle une intrusion.

On peut aussi, en ce qui concerne le système de détection, au lieu d'utiliser un séparateur 80, 81, défléchir, par effet mécanique ou acousto-optique, le faisceau lumineux en sortie, alternativement sur deux analyseurs orientés à 45° l'un de l'autre, chaque analyseur étant suivi d'un ou plusieurs détecteurs et formant une voie d'analyse indépendante. La fréquence de déflexion doit être rapide par rapport à une intrusion potentielle pour pouvoir "l'échantillonner" correctement. Les bandes passantes correspondant à une intrusion sont typiquement de quelques Hz (<10Hz). On pourrait aussi utiliser une cellule électro-optique à cristal liquide à commutation rapide (par rapport à l'intrusion) qui, sous l'application d'une tension, laisserait passer une orientation de polarisation et, sous une autre tension ferait tourner la polarisation de 45° par rapport à la précédente. La lumière ainsi analysée serait amenée à un ou plusieurs détecteurs de lumière qui seraient suivis d'un circuit électronique de commutation de voies synchrone avec l'excitation de la cellule électro-optique. Le signal d'intrusion serait ainsi "échantillonné" par chacune des deux voies. La cellule à cristal liquide jouerait le rôle d'un "rotateur" du plan de polarisation, celle-ci restant linéaire. Un dispositif qui modifierait la forme de la polarisation (elliptisation) ne conviendrait guère. Bien entendu les circuits de commutation de voies ainsi associés aux analyseurs viendraient s'ajouter éventuellement à ceux décrits plus haut et synchrones avec les changements de lumière à l'entrée, et ceci en toute indépendance.

Grâce aux dispositions de l'invention, des longueurs de fibre enterrée de plusieurs centaines de mètres peuvent être utilisées, permettant de détecter de façon fiable des forces appliquées sur le sol, de l'ordre de quelques centaines de newtons ou même moins.

## Revendications

1. Dispositif capteur à fibre optique monomode pour la mesure de force et/ou de pression, l'influence de la force ou de la pression à mesurer étant à peu près perpendiculaire à l'axe longitudinal de la fibre optique, dispositif muni de moyens pour introduire dans la fibre de la lumière polarisée et pour recevoir cette lumière à la sortie de la fibre dans un ensemble de détection sensible à la polarisation de la lumière et muni de moyens pour analyser la lumière selon au moins deux directions de polarisation différentes faisant entre elles un angle compris entre 30° et 60°, caractérisé en ce que ce dispositif est muni de moyens pour introduire à l'entrée de la fibre plusieurs lumières non corrélées et polarisées chacune de façon différente, et de moyens pour distinguer l'une de l'autre dans le susdit ensemble de détection à la sortie de la fibre, les lumières qui ont été introduites à l'entrée dans la fibre.

2. Dispositif capteur selon la revendication 1, caractérisé en ce qu'il est muni de moyens pour introduire à l'entrée des lumières polarisées linéairement.

3. Dispositif capteur selon la revendication 2, caractérisé en ce qu'il est muni de moyens pour introduire à l'entrée deux lumières qui sont disposées de façon que le plan de polarisation de l'une fasse un angle compris entre 30° et 60° avec le plan de polarisation de l'autre.

4. Dispositif capteur selon l'une des revendications 1 à 3, caractérisé en ce qu'il contient deux sources pour obtenir des lumières avec des longueurs d'ondes différentes, et que les moyens pour distinguer les lumières les unes des autres dans l'ensemble de détection sont basés sur la longueur d'onde de la lumière.

5. Dispositif capteur selon l'une des revendications 1 à 3, caractérisé en ce qu'il contient deux sources pour obtenir des lumières qui sont modulées chacune par une fréquence différente, et que les moyens pour distinguer les lumières les unes des autres dans l'ensemble de détection sont basés sur la détection de la fréquence de modulation.

6. Dispositif capteur selon l'une des revendications 1 à 3, caractérisé en ce qu'il contient deux sources pour obtenir des lumières qui sont activées tour à tour, et que les moyens pour distinguer les lumières les unes des autres dans l'ensemble de détection sont basés sur l'utilisation d'un synchronisme temporel entre les détecteurs et les sources.

7. Dispositif capteur selon l'une des revendications 1 à 3, caractérisé en ce qu'il contient une source unique pour obtenir les lumières, laquelle est suivie d'un dispositif électro-optique qui est modifié au cours du temps.

8. Dispositif capteur selon la revendication 7, caractérisé en ce que le dispositif électro-optique est une cellule de Faraday.

9. Dispositif capteur selon la revendication 7, caractérisé en ce que le dispositif électro-optique est un cristal liquide.

10. Dispositif capteur selon la revendication 9, caractérisé en ce que les parois du contenant du cristal liquide sont munis de moyens d'accrochage planaires des molécules, disposés selon deux directions d'accrochage à 45° l'une de l'autre.

11. Dispositif capteur selon l'une des revendications 7 à 10, caractérisé en ce que les moyens pour distinguer les lumières les unes des autres dans l'ensemble de détection sont basés sur l'utilisation d'un synchronisme temporel entre les détecteurs et le dispositif électro-optique.

12. Dispositif capteur selon l'une quelconque des revendications précédentes, caractérisé en ce qu'il est muni de moyens pour diviser le faisceau avant son entrée dans l'ensemble de détection et en ce qu'un analyseur circulaire est disposé sur le faisceau séparé supplémentaire, suivi d'un ensemble de détection supplémentaire.

13. Système de détection d'intrus muni d'un dispositif capteur selon l'une quelconque des revendications précédentes.

**Patentansprüche**

1. Sensoranordnung mit einer optischen Monomode-Faser zum Messen von Kraft und/oder Druck, wobei der Einfluß der zu messenden Kraft oder des zu messenden Drucks nahezu senkrecht zur Längsachse der optischen Faser ist einem Mittel zum Eingeben des polarisierten Lichts und zum Empfangen dieses Lichts am Ausgang der Faser in einer Detektoranordnung, die für die Polarisation des Lichts empfindlich und mit Mitteln zum Analysieren des Lichts gemäß wenigstens zwei verschiedenen Polarisationsrichnngen versehen ist, die zusammen einen Winkel zwischen 30 und 60° einschließen,
dadurch gekennzeichnet, daß die Anordnung mit Mitteln zum Einführen mehrerer nicht korrelierter Lichtsignale in den Eingang der Faser, die je auf eine andere Weise polarisiert sind, und mit Mitteln zum Unterscheiden in der Detektoranordnung am Ausgang der Faser zwischen den Lichtsignalen die in die Eingangsfaser eingegeben werden versehen ist.

2. Sensoranordnung nach Anspruch 1,
dadurch gekennzeichnet, daß sie Mittel zum Einführen linear polarisierter Lichtsignale in den Eingang enthält.

3. Sensoranordnung nach Anspruch 2,
dadurch gekennzeichnet, daß sie Mittel zum Einführen von zwei Lichtsignale in den Eingang enthält, die derart angeordnet sind, daß die Polarisationsebene des einen mit der Polarisationsebene des anderen einen Winkel zwischen 30° und 60° einschließt.

4. Sensoranordnung nach einem der Ansprüche 1 bis 3,
dadurch gekennzeichnet, daß sie zwei Quellen zum Erzeugen von Lichtsignalen mit verschiedenen Wellenlängen enthält, und daß die Mittel zum Unterscheiden zwischen den Lichtsignalen in der Detektoreinheit auf der Wellenlänge des Lichts basieren.

5. Sensoranordnung nach einem der Ansprüche 1 bis 3,
dadurch gekennzeichnet, daß sie zwei Quellen zum Erzeugen von Lichtsignalen enthält, die jede durch eine andere Frequenz moduliert werden, und daß die Mittel zum Unterscheiden zwischen den Lichtsignalen in der Detektoreinheit auf der Detektion der Modulationsfrequenz basieren.

6. Sensoranordnung nach einem der Ansprüche 1 bis 3,
dadurch gekennzeichnet, daß sie zwei Quellen zum Erzeugen von Lichtsignalen enthält, die abwechselnd eingeschaltet werden, und daß die Mittel zum Unterscheiden zwischen den Lichtsignalen in der Detektoreinheit auf der Verwendung von Zeitsynchronisation zwischen den Detektoren und den Quellen basieren.

7. Sensoranordnung nach einem der Ansprüche 1 bis 3,
dadurch gekennzeichnet, daß sie eine einzige Quelle zum Erzeugen der Lichtsignalen enthält, der eine elektrooptische Einrichnng nachgeschaltet ist, die im Laufe der Zeit geändert wird.

8. Sensoranordnung nach Anspruch 7,
dadurch gekennzeichnet, daß die elektrooptische Einrichnng ein Faraday-Zelle ist.

9. Sensoranordnung nach Anspruch 7,
dadurch gekennzeichnet, daß die elektrooptische Einrichnng ein Flüssigkristall ist.

10. Sensoranordnung nach Anspruch 9,
dadurch pekennzeichnet, daß die Wände des Flüssigkristallbehälters mit planaren Molekülkoppelmitteln versehen sind, die in zwei Koppelrichnngen unter einem Winkel von 45° miteinander angeordnet sind.

11. Sensoranordnung nach einem der Ansprüche 7 bis 10,
dadurch gekennzeichnet, daß die Mittel zum Unterscheiden zwischen den Lichtsignalen in der Detektoreinheit auf die Verwendung von Zeitsynchronisation zwischen den Detektoren und der elektrooptischen Einrichnng basieren.

12. Sensoranordnung nach einem oder mehreren der vorangehenden Ansprüche, dadurch gekennzeichnet, daß sie mit Mitteln zum Aufspalten des Bündels vor seinem Eintritt in die Detektoreinheit versehen ist, und daß ein Kreisanalysator auf dem zusätzlichen getrennten Bündel mit nachgeschalteter zusätzlicher Detektoreinheit angebracht ist.

13. Einbruchdetektionssystem mit einer Sensoranordnung nach einem oder mehreren der vorangehenden Ansprüche.

**Claims**

1. A monomode optical fibre sensor for measuring force and/or pressure, the influence of the force or the pressure to be measured being substantially perpendicular to the longitudinal axis of the optical fibre, said sensor being provided with means for feeding polarised light into the fibre and for receiving that light by a detection arrangement sensitive to the polarisation of the light at the output of the fibre, and being provided with means for analyzing the light according to at least two different polarisation directions, forming between them an angle comprised between 30° and 60°, characterized in that the device is provided with means for feeding several non-correlated light signals, each polarised differently, into the input of the fibre, and at the output of the fibre is provided with means for distinguishing in the said detection arrangement between the light signals fed into the fibre at the input.

2. A sensor as claimed in Claim 1, characterized in that it is provided with means for feeding linearly polarised light signals into the input.

3. A sensor as claimed in Claim 2, characterized in that it is provided with means for feeding into the input two light signals which are arranged in such a manner that the polarisation plane of one light signal is at an angle comprised between 30° and 60° to the polarisation plane of the other.

4. A sensor as claimed in one of the Claims 1 to 3, characterized in that it contains two sources for obtaining the light signals with different wavelength, and in that the means for distinguished between the light signals in the detection arrangement are based on the wavelength of the light.

5. A sensor as claimed in one of the Claims 1 to 3, characterized in that it contains two sources for generating the light signals, which are each modulated by a different frequency and in that the means for distinguishing between the light signals in the detection arrangement are based on the detection of the modulation frequency.

6. A sensor as claimed in one of the Claims 1 to 3, characterized in that it contains two sources for generating the light signals which are alternatively activated and in that the means for distinguishing between the light signals in the detection arrangement are based on the use of a time-synchronisation between the detectors and the sources.

7. A sensor as claimed in one of the Claims 1 to 3, characterized in that it contains a sole source for generating the light signals, which sole source is followed by an electro-optical device, modulated in time.

8. A sensor as claimed in Claim 7, characterized in that the electro-optical device is a Faraday cell.

9. A sensor as claimed in Claim 7, characterized in that the electro-optical device is a liquid crystal.

10. A sensor as claimed in Claim 9, characterized in that the walls of the liquid crystal container are provided with planar means for orienting molecules, which means are deposited according to two directions which enclose an angle of 45° with respect to each other.

11. A sensor as claimed in one of the Claims 7 to 10, characterized in that the means for distinguishing between the light signals in the detection arrangement are based on the use of a time synchronisation between the detectors and the electro-optical device.

12. A sensor as claimed in any one of the preceding Claims, characterized in that it is provided with means for dividing the beam before it is input into the detection arrangement and in that a circular analyzer is arranged in the additional separate beam, followed by an additional detection arrangement.

13. An intrusion detection system provided with a sensor as claimed in any one of the preceding Claims.

Y

A

P

α

β

X

**FIG.1**

71 λ2

91

1

2

70 λ1

90

**FIG.2**

40A

41A

30A α

α+45 31A

81

λ2

4

λ1

80

30B α

α+45 31B

40B

41B

11 f2

21

91

2

20

1

90

10 f1

**FIG.3**

50A f1

f2 51A

41

α+45 31

1

80

50B f1

f2 51B

40

30 α

FIG.4

FIG.5

FIG.6

FIG.7